Europäisches Patentamt

European Patent Office

Office européen des brevets

(19)

(11) Numéro de publication: **0 123 885**
**A1**

(12) **DEMANDE DE BREVET EUROPEEN**

(21) Numéro de dépôt: **84103219.6**

(22) Date de dépôt: **23.03.84**

(51) Int. Cl.³: **G 01 B 5/00**, G 01 B 7/00

(30) Priorité: **31.03.83 CH 1799/83**
**13.04.83 FR 8306154**

(43) Date de publication de la demande: **07.11.84**
**Bulletin 84/45**

(84) Etats contractants désignés: **CH DE FR GB IT LI SE**

(71) Demandeur: **MESELTRON S.A., Avenue de Beauregard 14/18, CH-2035 Corcelles (CH)**

(72) Inventeur: **Degoumois, Michel, Communal 6, CH-2400 Le Locle (CH)**

(74) Mandataire: **Barbeaux, Bernard et al, c/o ASUAG - Société Générale de l'Horlogerie Suisse S.A. 6, Faubourg du Lac, CH-2501 Bienne (CH)**

(54) Dispositif de mesure tridimensionelle.

(57) Le dispositif de mesure comporte un palpeur fixé à des éléments porte-palpeurs (4, 5, 6, 7, 8) et suspendu de manière à pouvoir se déplacer relativement à un bâti (1) dans trois directions orthogonales (x, y, z).

Pour chaque direction de déplacement sont prévus deux ponts mobiles parallèlement l'un par rapport à l'autre (11 et 12, 20 et 21, 28 et 24) articulés en rotation sur des éléments de liaison rigides (13, 14, 22, 25). Le dispositif peut être réalisé de façon que le retour du palpeur dans sa position de référence dans les deux premières directions de déplacement (x, y) soit assuré par gravité ou par des éléments de centrage prévus à cet effet.

0123885

Cas 320

## Dispositif de mesure tridimensionnelle

La présente invention concerne un dispositif de mesure tridimensionnelle, et elle se rapporte plus particulièrement à une tête de mesure susceptible d'être fixée sur une machine à mesurer, et prévue pour recevoir au moins un palpeur de mesure.

De tels dispositifs sont destinés à équiper des machines à mesurer de toutes les catégories de précision, et éventuellement des machines à usiner.

D'une façon générale, ces dispositifs permettent de suivre en continu la surface d'une pièce à mesurer et ils délivrent de manière analogique des signaux de mesure représentatifs de la position du point de la surface effleuré par l'extrémité d'un palpeur.

Un tel dispositif est décrit par exemple dans le modèle d'utilité allemand 72 31 877. Il comprend au moins un palpeur de mesure suspendu au moyen d'un dispositif de suspension de façon à pouvoir se déplacer selon trois directions orthogonales relativement à un bâti, ce dispositif de suspension comprenant, pour chaque direction de déplacement, deux ponts mobiles paralèllement l'un par rapport à l'autre, et raccordés par deux éléments de liaison rigides, articulés en rotation sur les ponts de façon à former avec eux un parallélogramme déformable, et un capteur de mesure prévu pour mesurer le déplacement relatif des deux ponts. Toutefois, dans ce dispositif, les différents ponts mobiles sont placés en série l'un sous l'autre, ce qui accroît l'encombrement de l'ensemble. De plus, les différents capteurs de déplacement associés à chaque direction sont groupés à la partie supérieure du dispositif, ce qui nécessite des moyens de transmission complexes pour transmettre le déplacement des différents ponts mobiles vers les capteurs de déplacement.

Un autre dispositif de mesure du type de celui de l'invention est décrit dans la demande de brevet français 2 311 275. Ce dispositif est plus compact que le précédent, puisqu'il est formé de ponts mobiles reliés deux à deux par des lames élastiques et imbriqués les uns dans les autres pour former un parallélépipède. Toutefois, là encore, les différents capteurs de déplacement sont groupés à la partie supérieure du dispositif, les lames élastiques formant les côtés de chaque parallélogramme déformable ne permettant pas de servir de support à ces capteurs, ni d'ailleurs à d'autres dispositifs qui pourraient être utiles, comme notamment des dispositifs de blocage de certaines directions de déplacement du palpeur, ou des dispositifs permettant de limiter ses oscillations. Un autre inconvénient de ce dispositif, lié à l'utilisation de lames élastiques reliant deux à deux les ponts mobiles l'un parallèlement à l'autre, réside dans le fait que la résistance des différents parallélogrammes à la torsion ainsi que la force de rappel qu'ils exercent sur le palpeur sont directement liées aux dimensions et aux caractéristiques mécaniques des lames élastiques utilisées, et ne peuvent donc pas être définies arbitrairement.

C'est pourquoi, le principal but de la présente invention est de proposer un dispositif de mesure tridimensionnelle compact, dans lequel les différents parallélogrammes déformables utilisés soient imbriqués les uns dans les autres, mais en utilisant des éléments de liaison entre les ponts mobiles parallèlement l'un par rapport à l'autre qui soient parfaitement rigides, et articulés auxdits ponts par une articulation de rotation quelconque, et dans lequel les forces de rappel du dispositif dans une position de référence ne soient plus définies par l'élasticité des articulations.

Pour permettre d'atteindre ce but, le dispositif de suspension qui fait partie du dispositif de mesure tridimensionnelle selon l'invention peut comporter, pour la première direction de déplacement du palpeur, un premier pont supérieur solidaire du bâti et un premier pont inférieur, pour la deuxième direction, un deuxième pont supérieur raccordé rigidement au premier pont inférieur et un deuxième pont inférieur, ces deuxièmes ponts étant disposés dans l'espace séparant les premiers ponts, et, pour la troisème direction, un premier pont latéral raccordé rigidement au deuxième pont inférieur et un deuxième pont latéral sur lequel est assujetti le palpeur de mesure qui est ainsi sollicité vers une position de référence dans les première et deuxième directions sous l'effet de la gravité.

Le dispositif de suspension peut également comporter, pour la première direction, un premier pont supérieur solidaire du bâti et un premier pont inférieur, pour la seconde direction, un deuxième pont inférieur raccordé rigidement au premier pont supérieur et un deuxième pont supérieur, ces deuxièmes ponts étant encore disposés dans l'espace séparant les premiers ponts, et, pour la troisième direction, un premier pont latéral raccordé rigidement au deuxième pont supérieur et un deuxième pont latéral sur lequel est assujetti le palpeur de mesure. Dans ce cas, le dispositif de mesure doit comporter en plus des moyens de centrage pour solliciter le palpeur vers une position de référence dans les première et deuxième directions.

Ainsi, il est possible de monter à l'intérieur même du volume délimité par les parallélogrammes imbriqués non seulement tous les capteurs de mesure de déplacement, mais également des dispositifs permettant de tarer la force de rappel exercée sur l'extrémité du palpeur, et des moyens pour bloquer à volonté certaines de ses directions de déplacement.

De plus, le dispositif de mesure proposé est susceptible de recevoir un grand nombre de palpeurs de mesure s'étendant non seulement à la partie inférieure du dispositif, mais également latéralement, dans au moins deux directions perpendiculaires.

L'invention sera bien comprise à la lecture de la description suivante, faite en référence aux dessins joints, parmi lesquels:

- la figure 1 est une vue en élévation d'une première forme possible d'exécution du dispositif selon l'invention;
- les figures 2 à 6, et 8, sont des vues identiques à celle de la figure 1, sur lesquelles certains éléments particuliers ont été représentés de manière distinctive;
- la figure 7 est une vue en plan d'un dispositif limiteur inclus dans l'appareil selon l'invention;
- les figures 9 et 10 sont respectivement une vue en plan et une vue latérale perpendiculaire à celle de la figure 1 du dispositif selon l'invention; et
- les figures 11 à 13 sont des vues analogues à celles des figures 2, 4 et 5 montrant une deuxième forme d'exécution du dispositif selon l'invention.

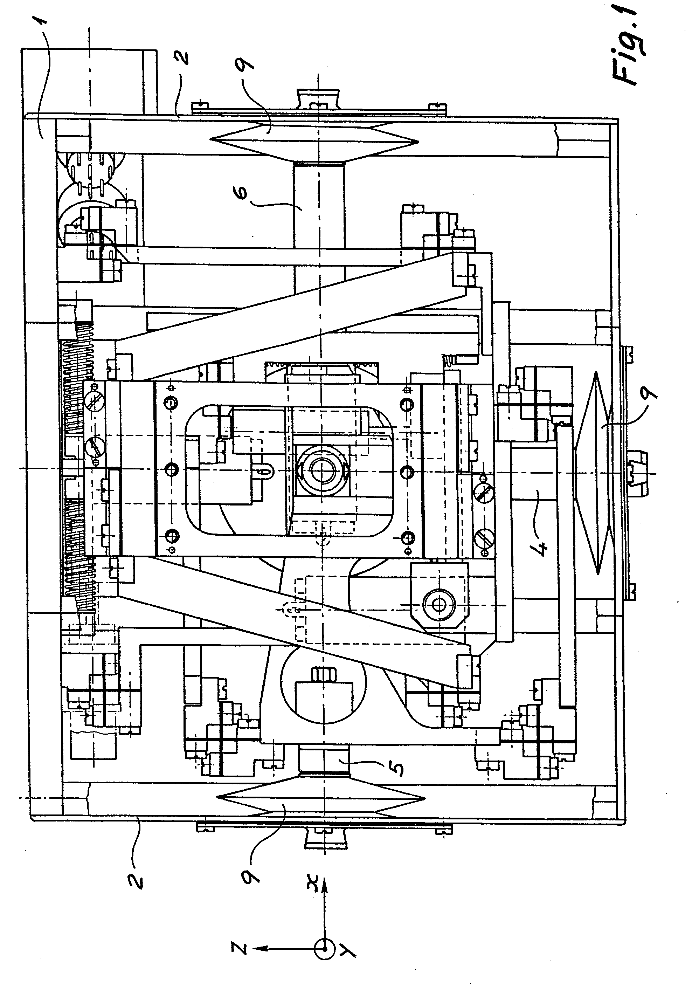

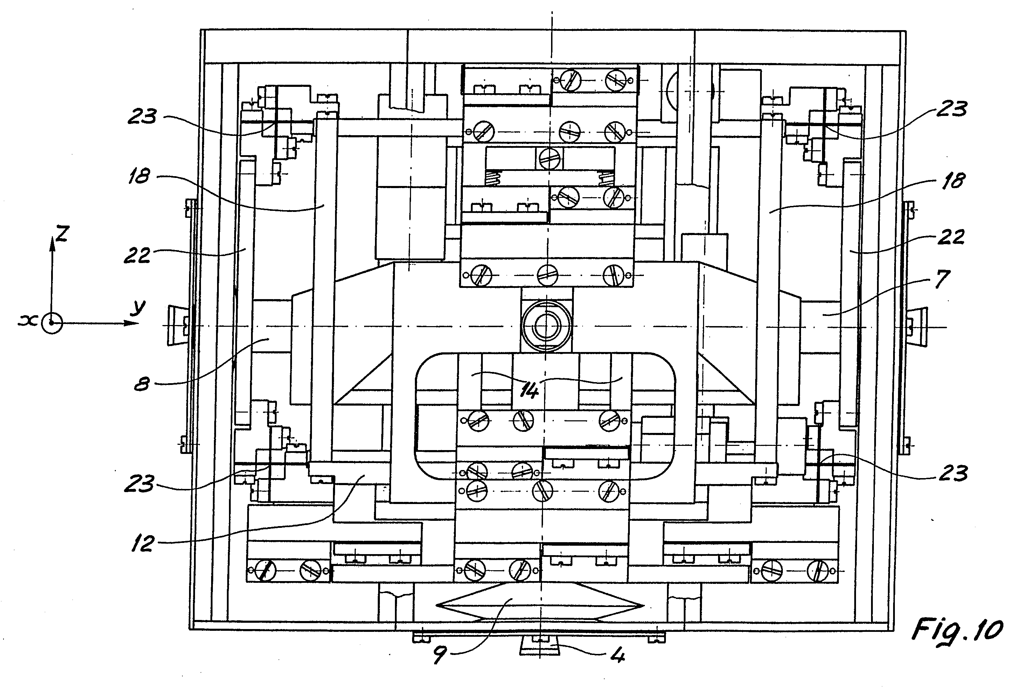

En se reportant tout d'abord aux figures 1, 9, et 10, on voit que le dispositif qui y est représenté comporte un bâti 1, susceptible d'être assujetti par exemple à une machine à mesurer et auquel est relié l'ensemble du mécanisme du dispositif. Le tout est enfermé dans un boîtier, par exemple de forme hexagonale, fermé par des parois 2. Le dispositif représenté permet d'assurer la suspension dans le boîtier d'un palpeur non représenté, susceptible d'être fixé à l'un ou l'autre des cinq éléments porte-palpeurs, dont l'un, 4, permet la mise en place d'un ou plusieurs palpeurs à la partie inférieure du boîtier, tandis que les autres éléments porte-palpeurs 5 et 6, 7 et 8 permettent la mise en place de palpeurs de part et d'autre des faces latérales du boîtier, selon deux directions orthogonales. Le boîtier est hermétiquement fermé, et son étanchéité à la poussière au niveau des sorties des palpeurs est assurée par des soufflets élastiques 9.

Comme on le verra plus en détail dans ce qui suit, le dispositif de suspension inclus dans le boîtier comporte, pour chaque direction de déplacement, deux ponts mobiles parallèlement l'un par rapport à l'autre, et reliés par deux éléments de liaison rigides articulés en rotation sur les ponts, de façon à former avec eux un cadre déformable. Les articulations choisies pour le mode de réalisation décrit sont constituées de lamelles élastiques croisées, mais d'autres modes de réalisation d'articulations pourraient tout aussi bien être utilisés, comme par exemple des paliers lisses, des paliers à billes, des paliers équipés de roulements à billes, ou des paliers flexibles à lames non croisées. Dans le cas de lames croisées, deux pièces articulées l'une sur l'autre sont reliées par deux lamelles élastiques, placées l'une à côté de l'autre ou imbriquées, et montées perpendiculairement, chacune étant fixée de manière amovible à chacune des pièces reliées, par exemple, par deux vis.

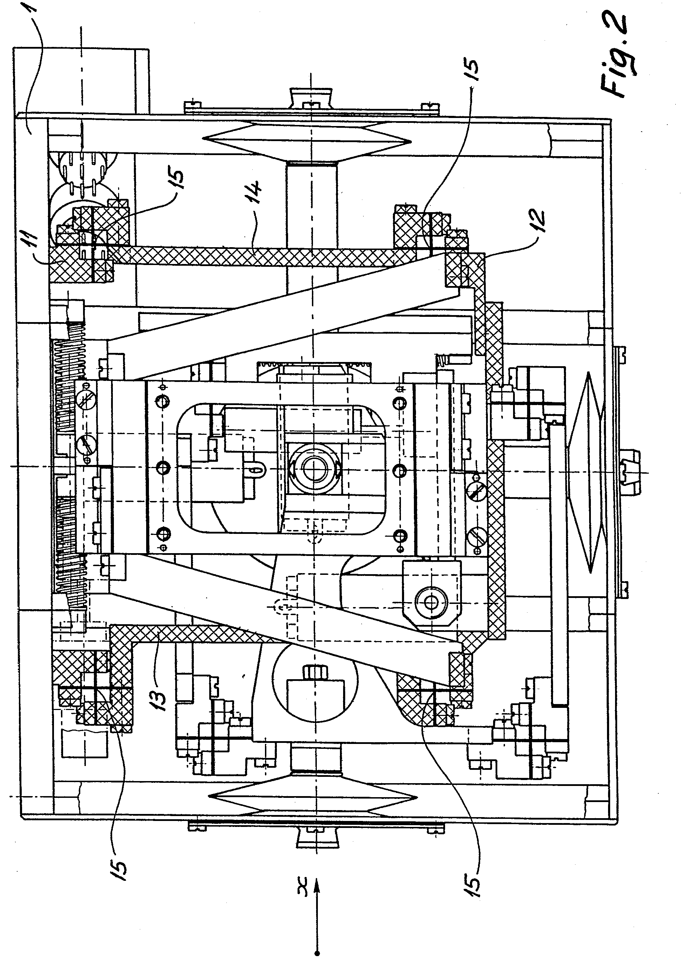

Dans la figure 2 on a représenté au moyen de hachures les éléments du dispositif de suspension assurant le déplacement selon la direction x, d'un palpeur de mesure. Ces éléments comprennent un premier pont supérieur 11 faisant corps avec le bâti 1, et un premier pont inférieur 12. Ces deux ponts sont reliés par des éléments de liaison rigides verticaux 13, 14, articulés sur les ponts 11 et 12 au moyen des articulations à lames élastiques croisées 15. De cette manière, le premier pont inférieur 12 se déplace parallèlement au premier pont supérieur 11, et il est ramené vers une position d'équilibre de référence du fait de la gravité, la force de rappel élastique des articulations à lames croisées n'étant pas nécessaire pour cela.

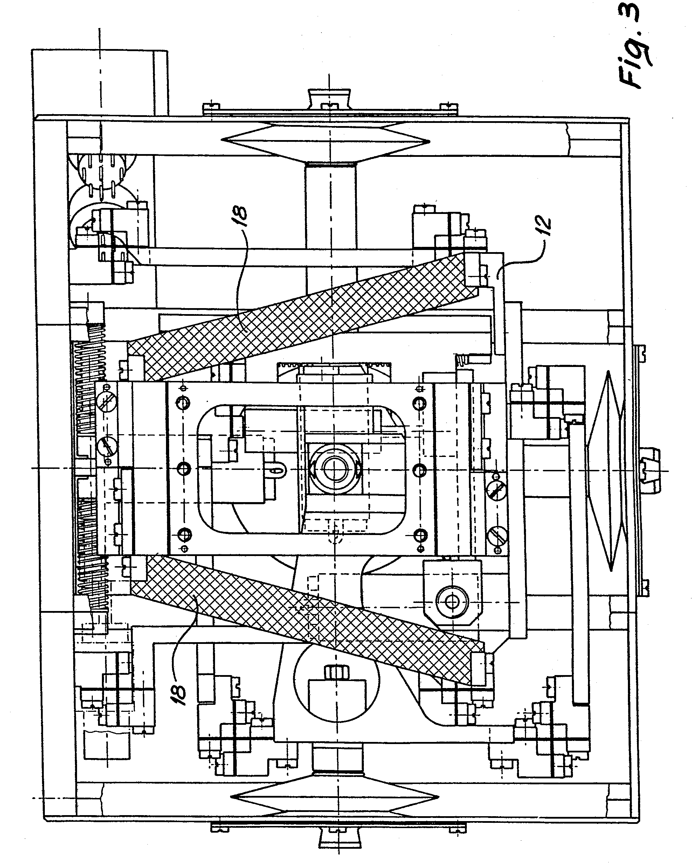

Dans la figure 3 on a représenté par des hachures un pont d'inversion formé par les éléments 18 liés rigidement au premier pont inférieur 12. Le pont d'inversion 18 permet simplement de ramener le mouvement du premier pont inférieur 12 vers la partie supérieure du dispositif, pour permettre de disposer les éléments de suspension associés à la deuxième direction de déplacement, y, également de façon que la force de gravité exerce sur eux le même effet de rappel que pour la première direction de déplacement, x.

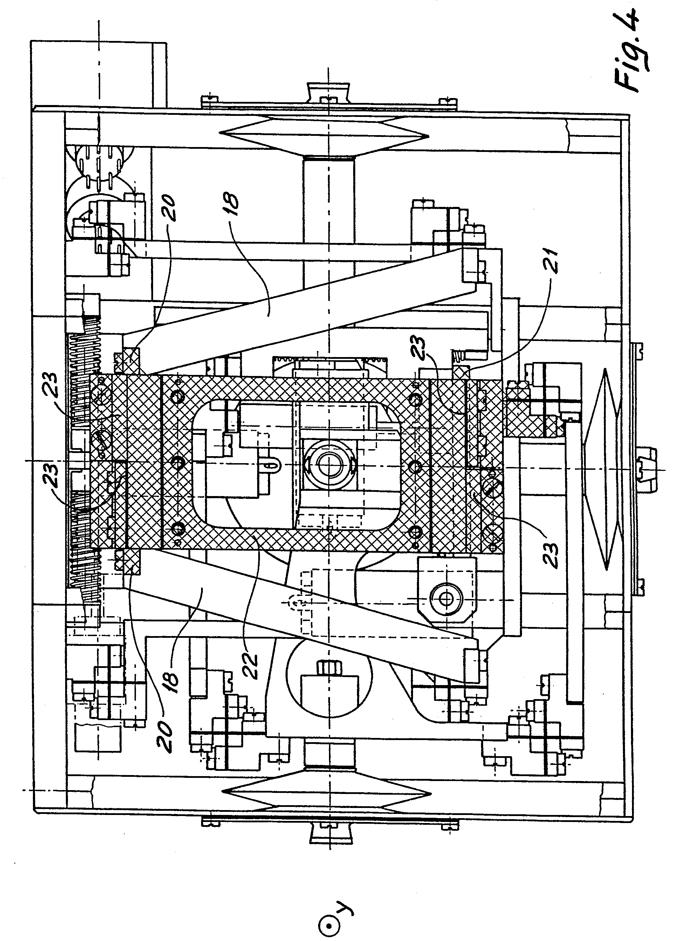

Dans la figure 4, on a représenté les éléments du dispositif de suspension assurant le déplacement selon la direction y des palpeurs de mesure. Ces éléments comprennent un deuxième pont supérieur 20, rigidement assujetti au pont d'inversion 18, et un deuxième pont inférieur 21 disposés dans l'espace séparant les premiers ponts 11 et 12 . Les ponts 20 et 21 sont reliés à des éléments de liaison rigides 22 comme précédemment par des articulations à lames croisées 23. Sur cette figure, on distingue clairement que les éléments de liaison 22, rigides, peuvent être de forme quelconque, et notamment ajourés pour permettre le passage d'un élément porte-palpeurs vers l'une des parois latérales du boîtier.

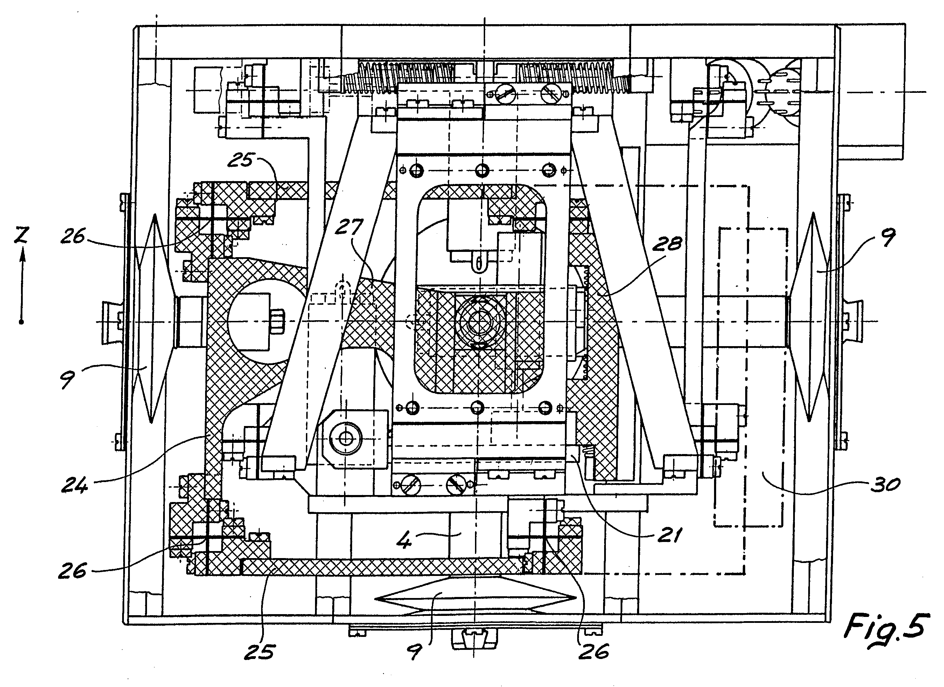

Enfin, on a représenté dans la figure 5 les éléments de suspension permettant d'assurer le déplacement selon l'axe z des différents palpeurs de mesure. A cet effet, le dispositif comprend un premier pont latéral 28 relié rigidement au deuxième pont inférieur 21, et un deuxième pont latéral 24, relié au précédent par des éléments de liaison 25 articulés sur les ponts par des paliers à lames croisées 26.

Le deuxième pont latéral 24 sert de support aux différents éléments porte-palpeurs. Pour des raisons de commodité, le deuxième pont latéral 24 présente une projection 27 s'étendant jusqu'au voisinage du centre du dispositif, pour servir de support aux éléments porte-palpeurs inférieurs et latéraux non situés à proximité immédiate de la partie verticale du pont latéral 24. De la même façon, pour permettre le passage de l'élément porte-palpeurs inférieur 4, l'élément de liaison inférieur 25 définit sensiblement une forme de triangle, dont le sommet est articulé en un point du deuxième pont latéral 24, et dont la base est raccordée aux deux extrémités latérales du premier pont latéral 28, le centre du triangle étant ainsi
libéré.

Normalement, la position de repos des éléments de suspension
associés à la direction z est définie uniquement par la réaction des
lames des paliers à lames croisées 26, et les efforts appliqués par
les soufflets d'étanchéité 9. C'est pourquoi il est prévu de soulager ces éléments au moyen d'un dispositif d'équilibrage exerçant sur
le deuxième pont latéral 24 une force qui s'oppose à son poids, de
manière à le solliciter vers sa position de référence.

La manière la plus simple de réaliser cet équilibrage est représentée par les lignes en traits mixtes de la figure 5, qui représentent un contrepoids 30 relié aux éléments de liaison 25. Lorsque le
contrepoids est relié aux deux éléments 25, il convient de le raccorder au moyen d'articulations en rotation sur ces pièces, pour
conserver la géométrie de l'ensemble, mais dans le cas où le contrepoids n'est relié qu'à un seul élément intermédiaire, une liaison
rigide est suffisante.

Alternativement, le contrepoids pourrait également être remplacé
par un moteur exerçant une traction réglable sur un ou plusieurs
ressorts agissant sur le pont latéral 24.

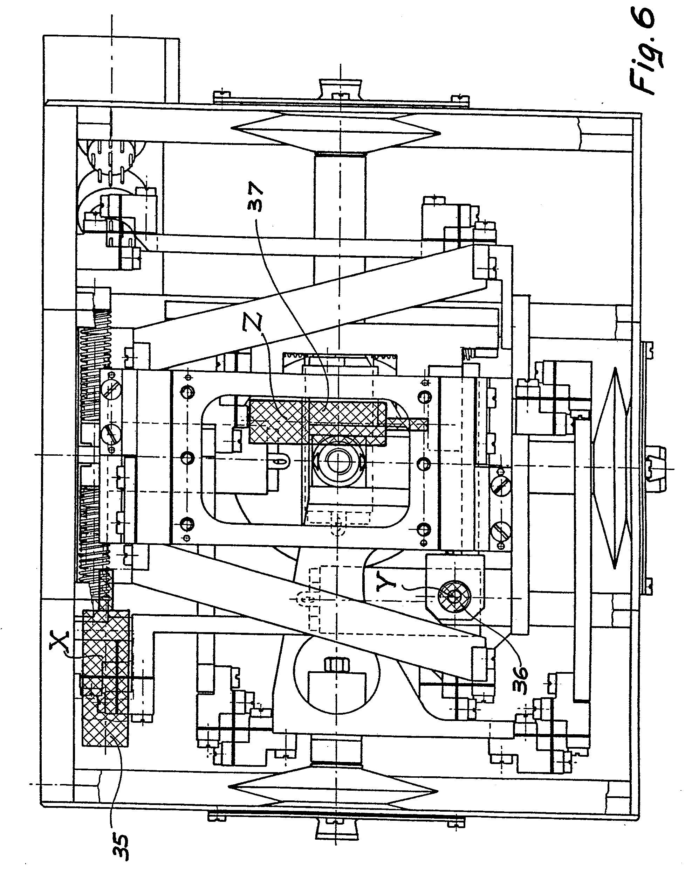

Dans la figure 6 on a représenté au moyen de hachures la position des différents transducteurs 35, 36 et 37, permettant la mesure
du déplacement des palpeurs selon les directions x, y, z respectivement. Ces capteurs de mesure sont constitués de préférence par des
capteurs inductifs, comprenant d'une part une bobine solidaire de
l'un des ponts associés à chaque direction de déplacement, et dans
laquelle plonge un noyau en ferrite solidaire de l'autre pont, qui
se déplace parallèlement au premier.

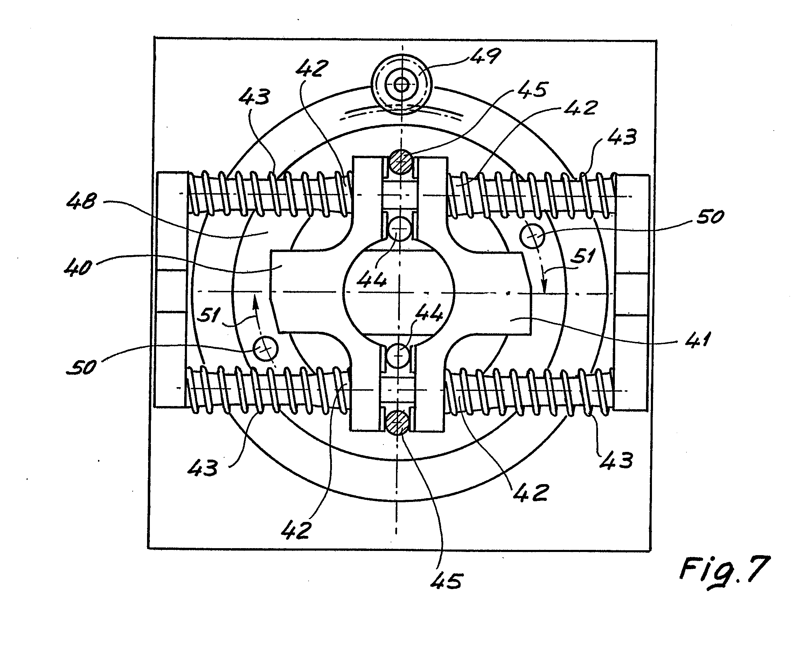

Sous la forme d'exécution qui est actuellement décrite, le dispositif selon l'invention est muni, pour chaque dispositif de déplacement, d'un dispositif limiteur prévu pour limiter les oscillations
du palpeur dans cette direction de déplacement, et lui assigner une
position de repos et pour définir la force d'appui du palpeur sur la
surface à mesurer nécessaire pour provoquer un déplacement du palpeur. Comme on le voit au mieux dans la figure 7, un dispositif
limiteur comprend deux pièces d'appui 40, 41, montées sur l'un des ponts associés à une direction, de façon à pouvoir être déplacées dans cette même direction. Par exemple, les pièces d'appui 40, 41, en forme de Ω, coulissent sur des axes 42, et sont sollicitées l'une vers l'autre sous l'effet de ressorts 43 traversés par les axes 42. Les pièces d'appui 40 et 41 s'appuient sous l'effet des ressorts 43 de part et d'autre de butées de positionnement 44 fixes, définissant la position de repos des pièces 40 et 41. En outre, une ou plusieurs goupilles mobiles 45, qui sont reliées au deuxième pont du dispositif de suspension associé à la direction déterminée, sont disposées de manière à déplacer l'une ou l'autre des pièces d'appui 40 et 41 à l'encontre de la force exercée par les ressorts de rappel 43, lorsque le palpeur se déplace dans la direction concernée.

Ainsi, les oscillations intempestives du palpeur sont évitées, puisqu'une force supérieure à celle définie par le ressort 43 est nécessaire pour le déplacer, dans l'un ou l'autre sens. La forme en Ω des pièces d'appui 40 et 41 est particulièrement intéressante, dans la mesure où elle permet de libérer au centre un passage, par exemple pour un élément porte-palpeur. Enfin, on notera que les axes 42 ne sont pas absolument nécessaires, mais qu'ils sont utiles pour éviter un déréglage du dispositif en cas de choc.

Enfin, le dispositif de la figure 7 comporte en outre des moyens de blocage permettant de bloquer temporairement les pièces d'appui 40 et 41, et ainsi d'interdire la direction de déplacement correspondante du palpeur. Ces moyens de blocage comportent une couronne 48 susceptible d'être entraînée en rotation, par exemple au moyen d'un pignon 49 actionné par un moteur électrique, entre une position libre, représentée dans la figure, où les pièces d'appui sont libres de se déplacer en s'écartant des butées de positionnement 44, et une position de blocage, dans laquelle des butées de blocage 50 viennent se déplacer, dans la direction des flèches 51, pour se mettre dans la trajectoire des pièces d'appui 40, 41, et ainsi interdire leur déplacement.

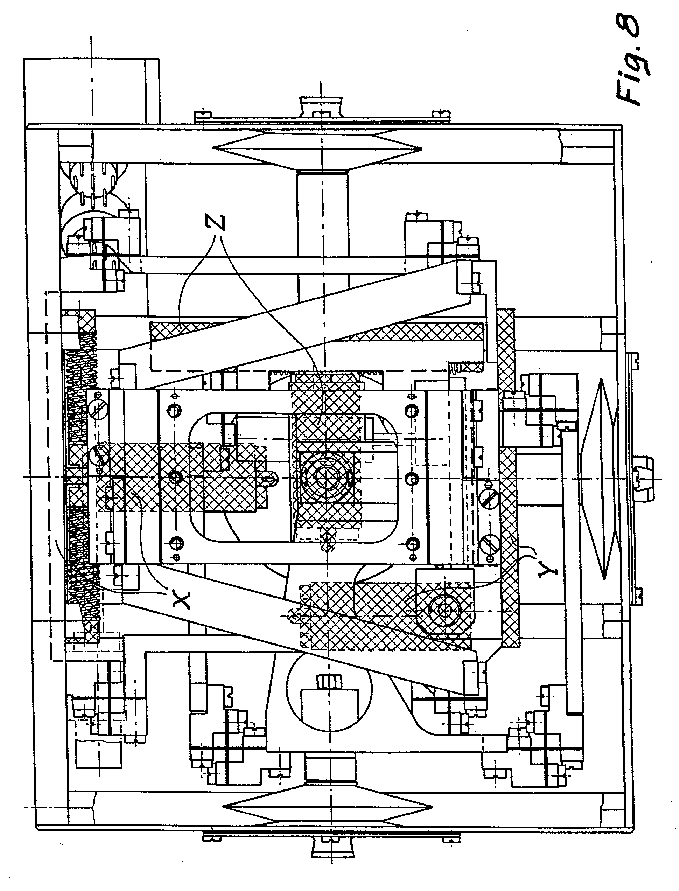

La figure 8 fait ressortir plus précisément l'implantation des différents dispositifs limiteurs, et celle des moteurs électriques associés, à l'intérieur du dispositif selon l'invention.

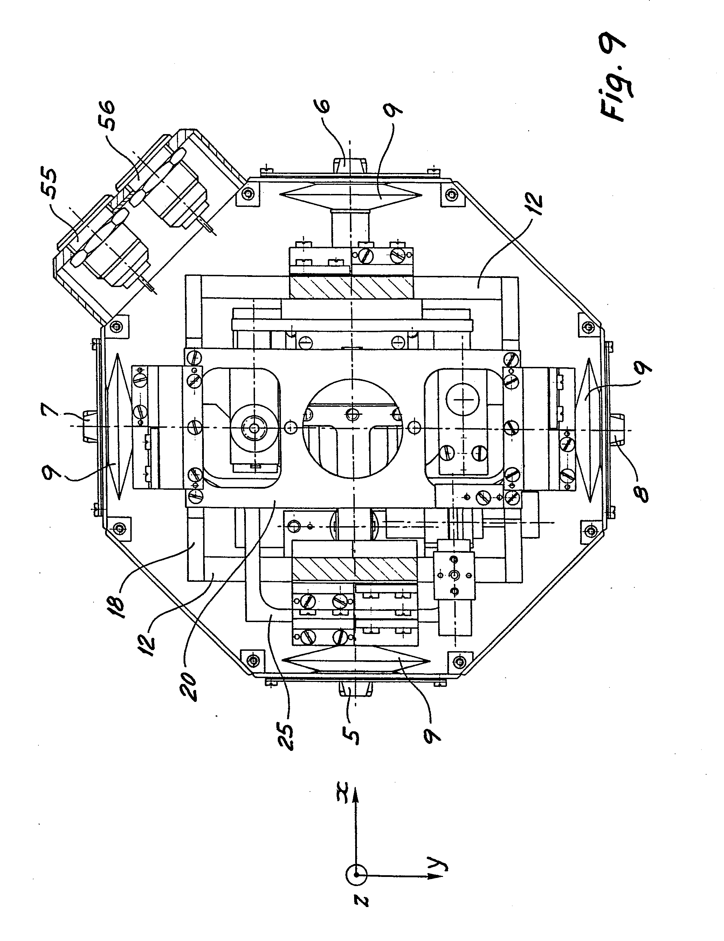

Bien entendu, en mode de fonctionnement, le dispositif selon l'invention doit être relié à un dispositif de commande, par exemple au moyen des broches 55, 56 de la figure 9, de façon à commander les différents moteurs assurant le blocage ou la libération des axes de déplacement du palpeur, et à recueillir les signaux émis par les capteurs de mesure de déplacement, par exemple pour utiliser ces signaux pour piloter les déplacements de la machine à mesurer elle-même.

L'expérience a montré que la forme d'exécution qui vient d'être décrite pouvait donner pleinement satisfaction à condition que l'ensemble formé par le dispositif de suspension et les éléments qu'il supporte reste relativement léger, mais que, par contre, lorsque l'on augmentait le poids de cet ensemble, notamment en utilisant des matériaux plus lourds pour réaliser le système de suspension, il arrivait fréquemment que l'on ne puisse plus compter sur la gravité pour ramener les ponts associés aux première et seconde directions de déplacement vers leur position d'équilibre de référence.

Une solution très simple à ce problème consiste à retourner le dispositif de suspension, c'est-à-dire à lui faire subir une rotation de 180$^o$ autour d'un axe parallèle à l'une des directions horizontales de déplacement, par exemple à la direction x, et à prévoir des éléments de centrage pour ces deux directions, ces éléments pouvant avantageusement être constitués par des dispositifs limiteurs d'oscillations tels que celui qui a été précédemment décrit en référence à la figure 7.

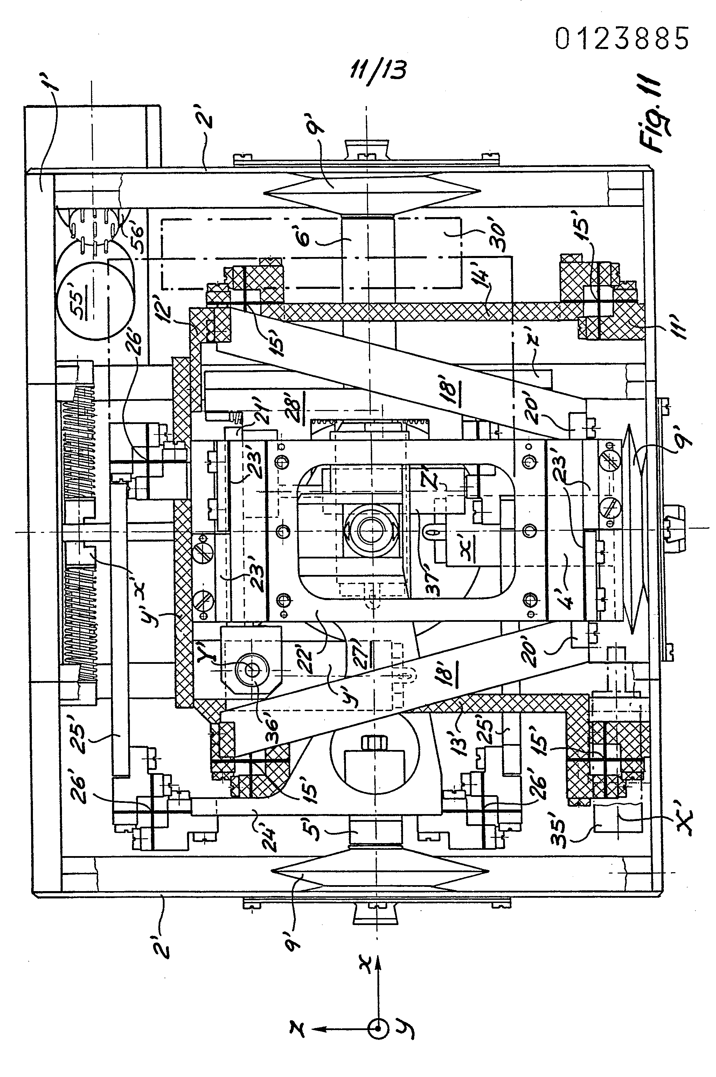

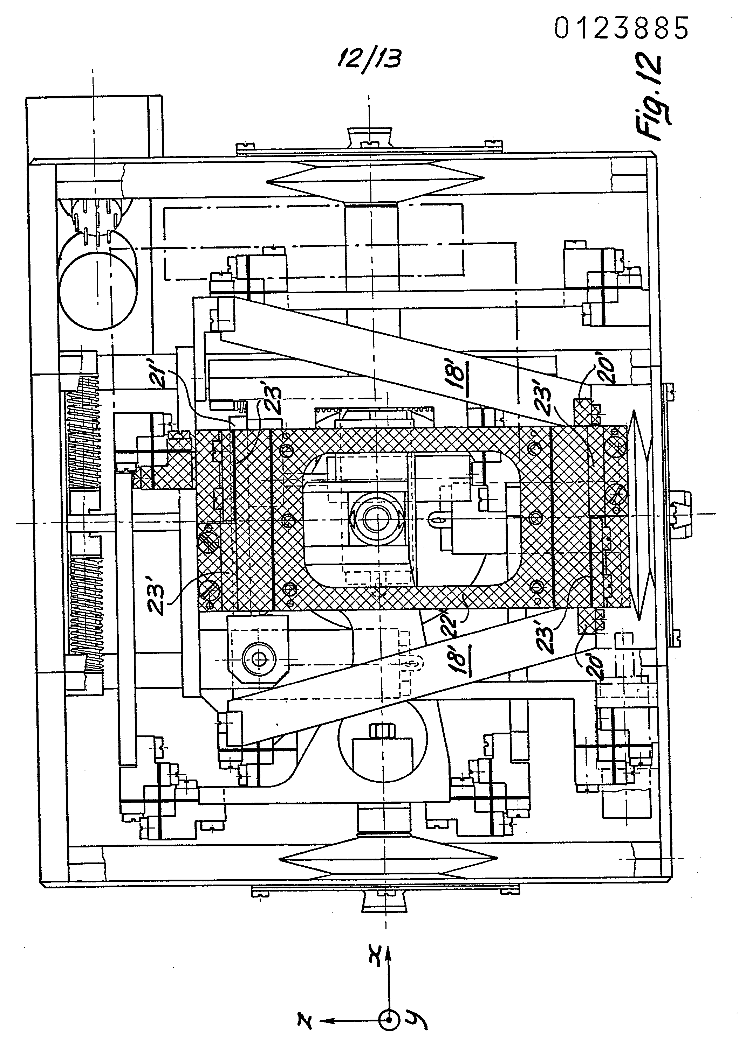

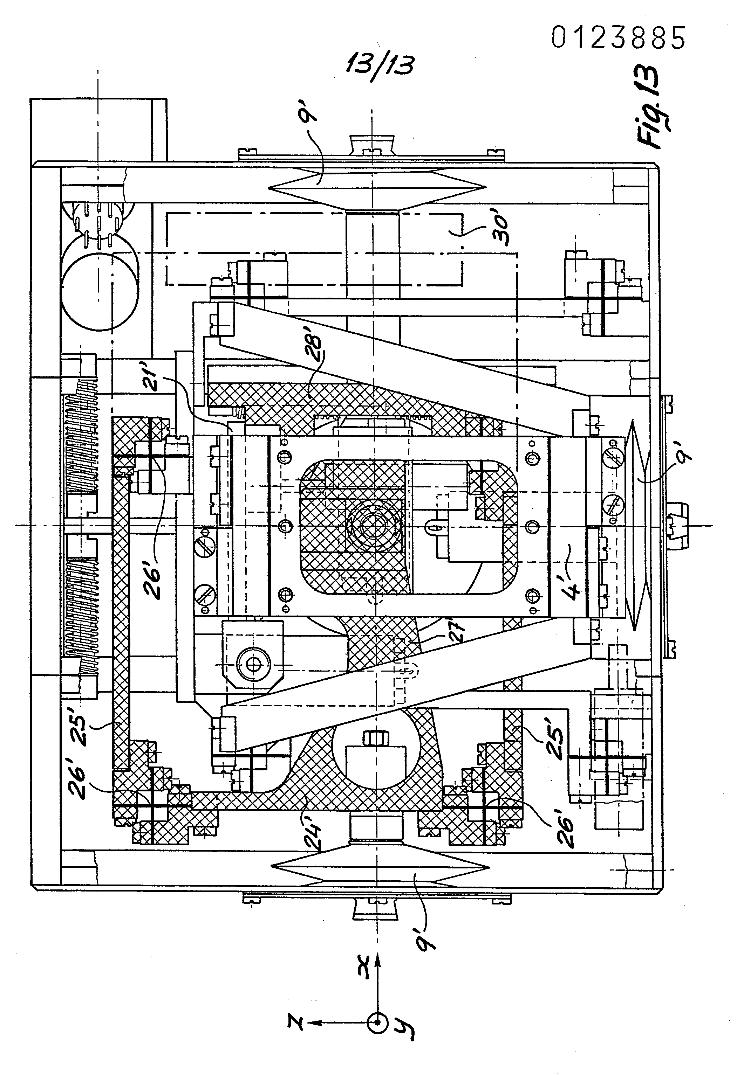

Cette modification conduit à une autre forme possible de réalisation du dispositif de mesure selon l'invention qui est représentée sur les figures 11 à 13. On retrouve naturellement dans ce second mode d'exécution tous les éléments du premier qui sont désignés par les mêmes repères affectés d'un signe prime. Des parties du dispositif comme les éléments porte-palpeurs 4', 5', 6', 7' et 8' ou les broches 55', 56' pour la commande des moteurs conservent bien entendu la même position que dans la première forme de réalisation. Par contre, d'autres composants comme les capteurs 35', 36', 37' pour la mesure du déplacement des palpeurs selon les directions y et z ou les dispositifs limiteurs pour ces mêmes directions sont restés fixes par rapport au dispositif de suspension, c'est-à-dire qu'ils ont accompagné celui-ci dans sa rotation de 180$^o$. Quant au dispositif limiteur associé à la direction x, il est préférable qu'il reste placé dans la partie supérieure du boîtier 1'.

Cette seconde forme d'exécution ne sera pas décrite en détail car il suffit de remplacer le qualificatif supérieur par inférieur et inversément pour les ponts associés aux directions de déplacement x et y, d'ajouter le signe prime aux repères, sauf en ce qui concerne les pièces constitutives des dispositifs limiteurs, et de supprimer les affirmations à propos du rôle de la gravité pour la définition des positions de référence, pour que tout ce qui a été dit à propos de la première forme de réalisation s'applique également à la seconde.

Enfin, il est bien clair que l'invention n'est pas limitée à ces deux modes d'exécution mais qu'elle est au contraire susceptible de faire l'objet de nombreuses modifications et variantes qui apparaîtront à l'homme de métier.

## Revendications

1. Dispositif de mesure tridimensionnelle, comprenant au moins un palpeur de mesure suspendu au moyen d'un dispositif de suspension de façon à pouvoir se déplacer simultanément selon trois directions orthogonales (x, y et z) relativement à un bâti, ce dispositif de suspension comprenant, pour chaque direction de déplacement, deux ponts mobiles parallèlement l'un par rapport à l'autre et raccordés par deux éléments de liaison rigides articulés en rotation sur les ponts de façon à former avec eux un cadre déformable, et un capteur de mesure prévu pour mesurer le déplacement relatif des deux ponts, caractérisé en ce que le dispositif de suspension comporte pour la première direction (x) un premier pont supérieur (11) solidaire du bâti (1) et un premier pont inférieur (12), pour la deuxième direction (y) un deuxième pont supérieur (20) raccordé rigidement au premier pont inférieur (12), et un deuxième pont inférieur (21), ces deuxièmes ponts étant disposés dans l'espace séparant les premiers ponts, et pour la troisième direction (z) un premier pont latéral (28) raccordé rigidement au deuxième pont inférieur (21), et un deuxième pont latéral (24) sur lequel est assujetti ledit palpeur de mesure, qui est ainsi sollicité vers une position de référence dans les deux premières directions sous l'effet de la gravité.

2. Dispositif selon la revendication 1, caractérisé en ce que le palpeur de mesure est sollicité vers une position de référence dans la troisième direction sous l'effet d'un dispositif d'équilibrage exerçant sur le deuxième pont latéral (24) une force s'opposant à son poids.

3. Dispositif selon la revendication 2, caractérisé en ce que le dispositif d'équilibrage comporte un contrepoids (30) relié aux éléments de liaison (25) raccordant les deux ponts latéraux (24, 28).

4. Dispositif selon la revendication 2, caractérisé en ce que le dispositif d'équilibrage comporte un moteur réglant l'effort de traction d'au moins un ressort agissant sur le deuxième pont latéral (24).

5. Dispositif selon l'une des revendications précédentes, caractérisé en ce que le deuxième pont latéral (24) comporte une projection (27) s'étendant jusqu'au voisinage du centre du dispositif, et qui sert de support à au moins deux éléments porte-palpeurs (4, 5, 6, 7, 8) servant au montage de palpeurs de mesure s'étendant à l'extérieur du dispositif dans des directions différentes.

6. Dispositif selon l'une des revendications précédentes, caractérisé en ce que l'élément de liaison (25) raccordant à leur partie inférieure les deux ponts latéraux (28, 24) définit sensiblement une forme de triangle, le sommet étant articulé en un point sur le deuxième pont latéral (24), et la base aux deux extrémités du premier pont latéral (28), le centre étant dégagé pour laisser le passage à un élément porte-palpeur inférieur (4).

7. Dispositif selon l'une des revendications précédentes, caractérisé en ce qu'il comporte au moins un dispositif limiteur prévu pour limiter les oscillations du palpeur dans l'une de ses directions de déplacement et lui assigner une position de repos et pour définir sa force d'appui sur la surface d'une pièce à mesurer, ce dispositif limiteur comprenant deux pièces d'appui (40, 41) montées sur l'un des ponts associés à cette direction de façon à pouvoir se déplacer dans cette même direction, sollicitées l'une vers l'autre sous l'effet de ressorts (43) et appuyées de part et d'autre de butées de positionnement (44) fixes par rapport à ce pont, et au moins une goupille (45) fixe par rapport au deuxième pont associé à cette direction et agissant sur lesdites pièces d'appui lors des déplacements du palpeur dans cette direction pour les déplacer de part et d'autre de leur position de repos en appui contre les butées de positionnement.

8. Dispositif selon la revendication 7, caractérisé en ce que les pièces d'appui (40, 41) présentent la forme d'un $\Omega$ et sont placées de manière à définir un passage entre elles.

9. Dispositif selon la revendication 7 ou la revendication 8, caractérisé en ce que le dispositif limiteur comporte en outre des moyens de blocage pour bloquer temporairement les pièces d'appui (40, 41) contre les butées de positionnement (44).

10. Dispositif selon la revendication 9, caractérisé en ce que lesdits moyens de blocage comportent une couronne (48) munie de butées de blocage (50), et susceptible d'être entraînée en rotation entre une position de blocage où les butées de blocage sont

12     0123885

disposées sur la trajectoire des pièces d'appui (40, 41) pour les empêcher de quitter leur appui contre les butées de positionnement (44), et une position libre où les butées de blocage sont écartées de la trajectoire des pièces d'appui.

11. Dispositif selon la revendication 10, caractérisé en ce que la couronne (48) est entraînée au moyen d'un moteur électrique.

12. Dispositif selon l'une des revendications 7 à 11, caractérisé en ce qu'il comporte un dispositif limiteur pour chaque direction de déplacement du palpeur.

13. Dispositif de mesure tridimensionnelle, comprenant au moins un palpeur de mesure suspendu au moyen d'un dispositif de suspension de façon à pouvoir se déplacer simultanément selon trois directions orthogonales (x, y et z) relativement à un bâti, ce dispositif de suspension comprenant, pour chaque direction de déplacement, deux ponts mobiles parallèlement l'un par rapport à l'autre et raccordés par deux éléments de liaison rigides articulés en rotation sur les ponts de façon à former avec eux un cadre déformable, et un capteur de mesure prévu pour mesurer le déplacement relatif des deux ponts, caractérisé en ce que le dispositif de suspension comporte, pour la première direction (x), un premier pont supérieur (12') solidaire du bâti (1') et un premier pont inférieur (11'), pour la seconde direction (y), un deuxième pont inférieur (20') raccordé rigidement au premier pont supérieur (12') et un deuxième pont supérieur (21'), ces deuxièmes ponts étant disposés dans l'espace séparant les premiers ponts et, pour la troisième direction (z), un premier pont latéral (28') raccordé rigidement au deuxième pont supérieur (21') et un deuxième pont latéral (24') sur lequel est assujetti le palpeur de mesure, ledit dispositif de mesure comportant en outre des moyens de centrage pour solliciter ledit palpeur vers une position de référence dans lesdites première et deuxième directions.

14. Dispositif selon la revendication 13, caractérisé en ce que le palpeur de mesure est sollicité vers une position de référence dans la troisième direction sous l'effet d'un dispositif d'équilibrage exerçant sur le deuxième pont latéral (24') une force s'opposant à son poids.

15. Dispositif selon la revendication 14, caractérisé en ce que le dispositif d'équilibrage comporte un contrepoids (30') relié aux

0123885

éléments de liaison (25') raccordant les deux ponts latéraux (24', 28').

16. Dispositif selon la revendication 14, caractérisé en ce que le dispositif d'équilibrage comporte un moteur réglant l'effort de traction d'au moins un ressort agissant sur le deuxième pont latéral.

17. Dispositif selon l'une quelconque des revendications 13 à 16, caractérisé en ce que le deuxième pont latéral (24') comporte une projection (27') s'étendant jusqu'au voisinage du centre du dispositif et qui sert de support à au moins deux éléments porte-palpeurs (4', 5', 6', 7', 8') servant au montage de palpeurs de mesure s'étendant à l'extérieur du dispositif dans des directions différentes.

18. Dispositif selon l'une quelconque des revendications 13 à 17, caractérisé en ce que l'élément de liaison (25') raccordant à leur partie inférieure les deux ponts latéraux (28', 24') définit sensiblement une forme de triangle, le sommet étant articulé en un point sur le deuxième pont latéral (24') et la base aux deux extrémités du premier pont latéral (28'), le centre étant dégagé pour laisser le passage à un élément porte-palpeur inférieur (4').

19. Dispositif selon l'une quelconque des revendications 13 à 18, caractérisé en ce qu'il comporte au moins deux dispositifs limiteurs prévus pour limiter les oscillations du palpeur dans les première et seconde directions (x, y) et lui assigner une position de repos et pour définir sa force d'appui sur la surface d'une pièce à mesurer, chaque dispositif limiteur comprenant deux pièces d'appui (40, 41) montées sur l'un des ponts associés à la direction correspondante de façon à pouvoir se déplacer dans cette direction, sollicitées l'une vers l'autre sous l'effet de ressorts (43) et appuyées de part et d'autre de butées de positionnement (44) fixes par rapport à ce pont, et au moins une goupille (45) fixe par rapport au deuxième pont associé à cette direction et agissant sur lesdites pièces d'appui lors des déplacements du palpeur dans cette direction pour les déplacer de part et d'autre de leur position de repos en appui contre les butées de positionnement.

20. Dispositif selon la revendication 19, caractérisé en ce que lesdits moyens de centrage comprennent lesdits dispositifs limiteurs.

14 0123885

21. Dispositif selon la revendication 19 ou 20, caractérisé en ce que les pièces d'appui (40, 41) présentent la forme d'un Ω et sont placées de manière à définir un passage entre elles.

22. Dispositif selon l'une des revendications 19 à 21, caractérisé en ce que chaque dispositif limiteur comporte en outre des moyens de blocage pour bloquer temporairement les pièces d'appui (40, 41) contre les butées de positionnement (44).

23. Dispositif selon la revendication 22, caractérisé en ce que lesdits moyens de blocage comportent une couronne (48) munie de butées de blocage (50) et susceptible d'être entraînée en rotation entre une position de blocage où les butées de blocage sont disposées sur la trajectoire des pièces d'appui (40, 41) pour les empêcher de quitter leur appui contre les butées de positionnement (44) et une position libre où les butées de blocage sont écartées de la trajectoire des pièces d'appui.

24. Dispositif selon la revendication 23, caractérisé en ce que la couronne (48) est entraînée au moyen d'un moteur électrique.

25. Dispositif selon l'une des revendications 19 à 24, caractérisé en ce qu'il comporte également un dispositif limiteur pour la troisième direction (z) de déplacement du palpeur.

0123885

Fig.1

Fig. 2

0123885

Fig. 3

18

12

18

0123885

Fig.4

Fig.5

Fig.6

6/13

0123885

0123885

Fig.7

Fig. 8

0123885

Fig. 9

Fig.10

0123885

Fig. 11

12/13

Fig.12

23'

21'

23'

18'

20'

23'

23'

18' 22'

20'

X

z ← ⊙ y

Fig.13

13/13

0123885

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| Y | FR-A-2 304 891 (ROLLS-ROYCE)<br>* Figures 4-8; page 4, ligne 16 - page 7, ligne 17 * | 1,2 | G 01 B 5/00<br>G 01 B 7/00 |
| Y | FR-A-2 420 404 (FUJITSU FANUC)<br>* Figures 2,3A-3D,4; page 2, ligne 31 - page 5, ligne 9 * | 1,2 | |
| D,A | DE-U-7 231 877 (CARL ZEISS)<br>* Figures 1,2; page 4, ligne 21 - page 6, ligne 30 * | 1,2,4 | |
| A | PROCEEDINGS OF THE SOCIETY OF PHOTO-OPTICAL INSTRUMENTATION ENGINEERS (SPIE), vol. 191, "Multiplex and/or high-throughput spectroscopy", 1979, pages 88-91, Bellingham, Washington, US; R.P. WALKER et al.: "Interferometer design and data handling in a high-vibration environment"<br>* Figures 2,3; page 88, alinéa 4 - page 89, alinéa 2, "Mirror transport pivots" * | 1,3 | DOMAINES TECHNIQUES RECHERCHES (Int. Cl. 3)<br><br>G 01 B 5/00<br>G 01 B 7/00<br>G 01 B 11/00<br>G 01 B 3/00 |
| A | US-A-3 990 153 (CALAME)<br>* Figure 1; colonne 4, lignes 19-68 * | 5 | |

--- -/-

Le présent rapport de recherche a été établi pour toutes les revendications

| Lieu de la recherche<br>LA HAYE | Date d'achèvement de la recherche<br>26-06-1984 | Examinateur<br>DRYSDALE N. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03 82

**Office européen des brevets**

| DOCUMENTS CONSIDERES COMME PERTINENTS | | | Page 2 |
|---|---|---|---|
| Catégorie | Citation du document avec indication, en cas de besoin, des parties pertinentes | Revendication concernée | CLASSEMENT DE LA DEMANDE (Int. Cl. 3) |
| A | DE-A-2 356 030 (ERNST LEITZ)<br>* Figures 1-4; page 3, ligne 22 - page 4, ligne 20 *<br><br>----- | 7,12 | |
| | | | DOMAINES TECHNIQUES RECHERCHES (Int. Cl. 3) |

Le présent rapport de recherche a été établi pour toutes les revendications

| Lieu de la recherche | Date d'achèvement de la recherche | Examinateur |
|---|---|---|
| LA HAYE | 26-06-1984 | DRYSDALE N. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82